(19) Europäisches Patentamt

European Patent Office

Office européen des brevets

(11) Veröffentlichungsnummer: **0 283 772 B1**

(12) **EUROPÄISCHE PATENTSCHRIFT**

(45) Veröffentlichungstag der Patentschrift: **29.01.92**

(21) Anmeldenummer: **88103101.7**

(22) Anmeldetag: **02.03.88**

(51) Int. Cl.⁵: **H04N 3/185**, H02M 3/335

(54) Schaltungsanordnung zur Begrenzung einer aus einer Sekundärwicklung eines Transformators über einen Gleichrichter gewonnenen Betriebsspannung.

(30) Priorität: **12.03.87 DE 3707929**

(43) Veröffentlichungstag der Anmeldung:
**28.09.88 Patentblatt 88/39**

(45) Bekanntmachung des Hinweises auf die Patenterteilung:
**29.01.92 Patentblatt 92/05**

(84) Benannte Vertragsstaaten:
**AT BE CH DE ES FR GB IT LI LU NL SE**

(56) Entgegenhaltungen:
**FR-A- 2 262 462**
**US-A- 3 691 422**
**US-A- 3 878 326**

**PATENT ABSTRACTS OF JAPAN, Band 7, Nr. 60 (P-182)[1205], 12. März 1983; & JP-A-57 206 943 (TOKYO SHIBAURA DENKI K.K.) 18-12-1982**

**PATENT ABSTRACTS OF JAPAN, Band 6, Nr. 144 (E-122)[1022], 3. August 1982; & JP-A-57 68 676 (MATSUSHITA DENKI SANGYO K.K.) 27-04-1982**

**TECHNIQUE DE LA COMPAGNIE FRANCAISE**

THOMSON-HOUSTON (ELECTRONIOUE), Nr. 31, September 1959, Seiten 65-94; R. GOSMAND: "Les convertisseurs statiques à transistors"

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Dieterle, Franz**
**Sommerauerstrasse 31**
**W-7742 St. Georgen(DE)**
Erfinder: **Hartmann, Uwe**
**Tallardstrasse 15**
**W-7730 Villingen-Schwenningen(DE)**
Erfinder: **Mai, Udo**
**Mühleschweg 2**
**W-7730 Villingen-Schwenningen 23(DE)**

EP 0 283 772 B1

## Beschreibung

Die Erfindung bezieht sich auf eine Schaltungsanordnung zur Begrenzung einer aus einer Sekundärwicklung eines Transformators über einen Gleichrichter gewonnenen Betriebsspannung, dessen Primärwicklung einerseits an einer stabilisierten gegenüber der erstgenannten Betriebsspannung höheren Betriebsspannung liegt und andererseits über einen getakteten elektronischen Schalter nach Bezugspotential schaltbar ist.

Eine derartige Schaltung ist in DE-C-24 33 074 beschrieben. Zwecks Energierückgewinnung von sekundärseitig nicht verbrauchter Leistung und damit zwecks Leistungseinsparung wird diese über eine Diode in die Primärwicklung des Transformators eingekoppelt. Dies geschieht jedoch während des Hinlaufs der Zeilenablenkung, so daß sich zu Beginn des Zeilenhinlaufs auftretende Schwingungen als senkrechte Streifen am linken Bildrand in nachteilhafterweise bemerkbar machen. Ausserdem liegt bei der bekannten Anordnung während des Rücklaufs nahezu die gesamt Rücklaufspannung des Schalttransistors an der Diode, da der Einspeisungspunkt in die Primärwicklung nahe am Kollektor des Schalttransistors liegt.

Der Erfindung liegt die Aufgabe zugrunde, bei einem sehr einfachen Schaltungsaufbau eine große Zuverlässigkeit zu erzielen. Diese Aufgabe wird durch die im Patentanspruch 1 angegebene Erfindung gelöst.
Weitere Ausgestaltungen der Erfindung ergeben sich aus den abhängigen Ansprüchen.

Nachstehend wird die Erfindung an einem konkreten und erprobten Ausführungsbeispiel mit Hilfe der Zeichnung erläutert.

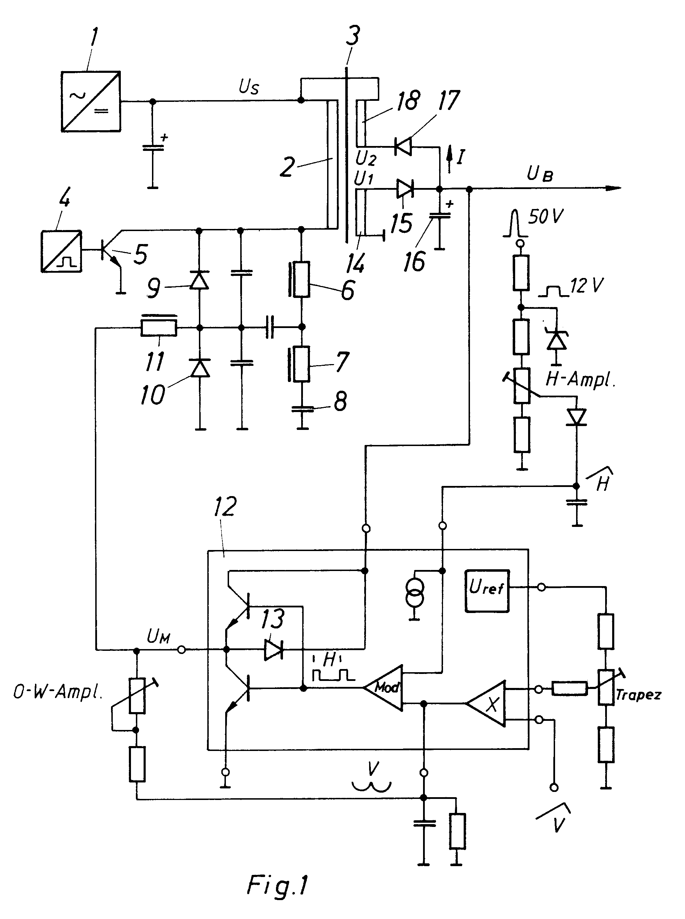

Figur 1   zeigt die wesentlichen Teile der Erfindung in einem Schaltbild

Figur 2   zeigt erläuternde Diagramme zur Wirkungsweise der Schaltung nach Figur 1.

Die Erfindung wird an einem Schaltungsbeispiel für einen Diodenmodulator in einem Fernsehempfänger beschrieben. Ein Diodenmodulator dient in einem Fernsehempfänger zur Entzerrung des sogenannten Ost-West-Kissens, d.h. zur Entzerrung von Abbildungsfehlern, die dadurch zustande kommen, daß der Krümmungsmittelpunkt der gewölbten Bildschirmfläche nicht mit dem Ablenkzentrum der Elektronenstrahlablenkung zusammenfällt. Ein Diodenmodulator zur Entzerrung der Abbildungsfehler ist ausführlich in der DE-C-20 31 218 beschrieben. Die Betriebsspannung für die Horizontalablenkstufe mit integrierter Ost-West-Korrektur ist dabei so hoch eingestellt, daß der Ablenkkreis ohne Modulation des Ablenkstromes mehr Energie aufnimmt als es zur Einstellung der genauen Bildbreite notwendig wäre. Zur Verringerung der Bildbreite auf das genaue Maß wird dem Ablenkkreis durch den erwähnten Diodenmodulator Energie entnommen. Diese Energie wird nicht in Wärme umgewandelt und damit vergeudet, sondern nach der in der DE-C-24 33 074 offenbarten Lehre in eine Betriebsspannungsschiene des Fernsehempfängers zurückgeliefert und somit Energie eingespart. Eine solche Rückspeisung ergibt jedoch Probleme, wenn mehrere Stufen an einer einzigen Betriebsspannung mehr Energie abgegen als aufnehmen. Wird die rückgelieferte Energie größer als die verbrauchte, so sperrt dieGleichrichterdiode und die Betriebsspannung steigt soweit an, bis der erhöhten Spannung erhöhte Leistungsaufnahme wieder im Gleichgewicht ist.

Die Erfindung wird nachstehend ihrer Anwendung auf eine Schaltung zur Erzeugung des horizontalen Ablenkstroms in Verbindung mit einem Diodenmodulator beschrieben. Die Schaltung zur Erzeugung eines horizontalfrequenten Ablenkstroms wird von einer aus einem stabilisierten Neztteil 1 entnommenen Betriebsspannung US gespeist, die über eine Wicklung 2 eines Transformators 3 und über einen mit zeilenfrequenten Impulsen aus einer Steuerschaltung 4 getakteten elektronischen Schalter 5 nach Masse schaltbar ist. Der Zeilenablenkstrom fliesst durch die Ablenkspule 6 durch eine Brückenspule 7 und den Kondensator 8 nach Masse. In umgekehrter Richtung wird der Stromkreis über die Rücklaufdioden 9 und 10 geschlossen. Der den horizontalen Ablenkstrom zur Ost-West-Entzerrung notwendige vertikalfrequent modulierende Strom wird über eine Einkoppelspule 11 dem Ablenkkreis entzogen. Der modulierende Strom wird durch eine an sich bekannte Steuerschaltung 12 (z.B. TEA 2031) erzeugt. Die dem Ablenkkreis entzogene Energie wird über die Diode 13 in die Betriebsspannungsquelle UB zurückgeliefert. Die Betriebsspannung UB wird aus einer Wicklung 14 über einen Gleichrichter 15 an einem Kondensator 16 erzeugt Hierbei wird die modulierende Spannung UM am Ausgang der Steuerschaltung 12 immer kleiner als die Betriebsspannung UB sein. Wenn nun z.B. durch Ausfall von Verbrauchern infolge eines Defektes, so daß über die Rücklieferungsdiode 13 mehr Energie angeliefert wird, kann es vorkommen, daß die Gleichrichterdiode 15 gespeist wird und die Betriebsspannung $U_B$ ansteigt. Dadurch werden jedoch an diese angeschlossene empfindliche Bauteile wie z.B. integrierte Schaltkreise zerstört. Man kann diese überschüssige Energie über einen Widerstand vernichten, was aber den Wirkungsgrad der Schaltung beeinträchtigt.

Durch die Ankopplung der Diode 17 über eine entsprechend dimensionierte Sekundärwicklung 18 ist es möglich, die Energie in eine höhere Betriebsspannung einzuspeisen. Zweckmäßigerweise geschieht dies in die bereits stabilisierte Spannung $U_S$, da diese durch das geregelte Netzteil konstant gehalten wird. Die zurückgelieferte Energie steht der Zeilenablenkung zur Verfügung. Die Windungszahl n der Sekundärwicklung 18 ist derart gewählt, daß die an ihr auftretende negative gerichtete Rücklaufspannung $U_R$ gerade so groß ist, daß sie das Potential der erzeugten Betriebsspannung $U_B$ erreicht.

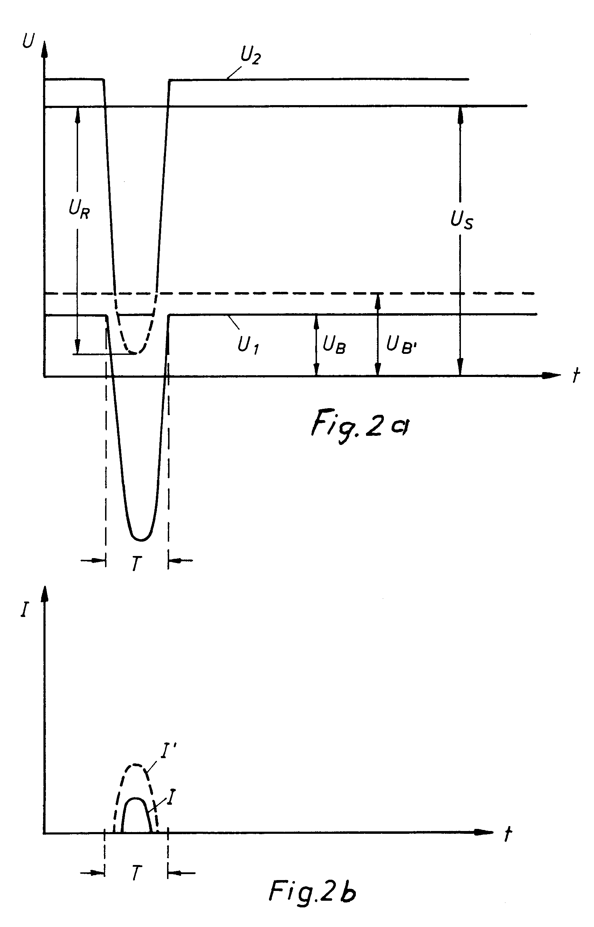

In Figur 2 sind die Spannungs- und Stromverhältnisse aufgetragen, wie sie sich für verschiedene Betriebszustände ergeben.

In Figur 2a ist der Verlauf der Sekundärspannung U1 am oberen Ende der Wicklung 14 dargestellt. Hinter dem Gleichrichter 15 entsteht am Kondensator 16 die Betriebsspannung UB. Ebenso ist die höhere stabilisierte Betriebsspannung US dargestellt. Der sich am diodenseitigen Ende der Wicklung 18 ausbildende Spannungsverlauf U2 ist ebenfalls aufgetragen. Der Rücklaufanteil UR während der Zeitspannung T ist derart gerichtet, daß er sozusagen in die Betriebsspannung UB eintaucht. Sobald die Spannung UR kleiner wird als die Betriebsspannung UB wird die Diode 17 geöffnet und es kann ein Strom I in die Betriebsspannung US fliessen. (Figur 2b) Da dies im Zeilenrücklauf geschieht, können sich Schwingungen nicht störend auswirken. Steigt aus irgend einem Grund die Betriebsspannung UB auf UB' an taucht die Spannung UR um so tiefer in diese Spannung UB' ein, so daß ein um so höherer Strom I' zurückgeliefert wird (Figur 2b). Je höher also die Betriebsspannung ansteigt, desto größer wird auch der Strom durch die Wicklung 18. Auch die Stromflußzeit wird durch die Form der Rücklaufspannung erhöht, was eine weitere stabilisierende Wirkung auf die Betriebsspannung UB hat.

**Patentansprüche**

1. Schaltungsanordnung zur Begrenzung einer aus einer ersten Sekundärwicklung eines Transformators über einen Gleichrichter gewonnenen ersten Betriebsspannung (UB), dessen Primärwicklung einerseits an einer stabilisierten gegenüber der ersten Betriebsspannung höheren zweiten Betriebsspannung (US) liegt und andererseits über einen getakteten elektronischen Schalter nach Bezugspotential schaltbar ist, **dadurch gekennzeichnet,** daß die erste Betriebsspannung (UB) über einen in Durchlassrichtung gepolten Gleichrichter (17) und eine zweite Sekundärwicklung (18) des Transformators (3) an die höhere zweite Betriebsspannung (US) geschaltet ist.

2. Schaltungsanordnung nach Anspruch 1, **dadurch gekennzeichnet,** daß die Windungszahl (n) der Sekundärwicklung (18) derart bemessen ist, daß die während der Sperrphase des elektronischen Schalters (5) an dieser auftretende Rücklaufspannung (UR) größer ist als die Differenz (US-UB) aus der stabilisierten zweiten Betriebsspannung (US) und der ersten Betriebsspannung (UB).

3. Schaltungsanordnung nach einem der Ansprüche 1 oder 2, **dadurch gekennzeichnet,** daß die Polung der Sekundärwicklung (18) derart gewählt ist, daß die Rücklaufspannung (UR) an der Kathode des Gleichrichters (17) zeitweise unter die erste Betriebsspannung (UB) absinkt, so daß während des Rücklaufs ein Strompfad über den Gleichrichter (17) und über die Sekundärwicklung (18) zur zweiten Betriebsspannung (US) gebildet wird.

4. Schaltungsanordnung nach einem der Ansprüche 1 bis 3, **dadurch gekennzeichnet,** daß sie in der Horizontalablenkung in einem Fernsehempfänger verwendet ist, bei der die zu begrenzende Betriebsspannung (UB) für die Schaltung zur Ost-West-Modulation des horizontalen Ablenkstromes erzeugt wird.

**Claims**

1. Circuit arrangement for limiting a first operating voltage (UB) obtained from a first secondary winding of a transformer via a rectifier, the primary winding of said transformer on the one hand lying at a stabilized second operating voltage (US) higher compared with the first operating voltage and on the other hand connected to reference potential via a clocked electronic switch, **characterised in that** the first operating voltage (UB) is connected via a rectifier (17) poled in forward direction and a second secondary winding (18) of the transformer (3) to the higher second operating voltage (US).

2. Circuit arrangement according to claim 1, **characterised in that** the number of windings (n) of the secondary winding (18) is proportioned in such a way that the flyback voltage (UR) occurring at the latter during the off phase of the electronic switch (5) is greater than the difference between the stabilized second operating voltage (US) and the first operating voltage (UB).

3. Circuit arrangement according to any one of claims 1 or 2, **characterised in that** the polarity of the secondary winding (18) is selected in such a way that the flyback voltage (UR) at the cathode of the rectifier (17) drops at times below the first operating voltage (UB), so that during the flyback a current path is formed via the rectifier (17) and via the secondary winding (18) to the second operating voltage (US).

4. Circuit arrangement according to any one of claims 1 to 3, **characterised in that** it is used in the horizontal deflection in a television receiver, in which the operating voltage (UB) to be limited is generated for the switching of the east-west modulation of the horizontal deflection current.

**Revendications**

1. Dispositif de circuit pour la limitation d'une première tension de fonctionnement (UB) obtenue à partir d'un premier enroulement secondaire d'un transformateur par un redresseur de courant, transformateur dont l'enroulement primaire se situe d'une part à une seconde tension de fonctionnement (US) stabilisée qui est plus élevée que la première tension de fonctionnement et qui est, d'autre part, commutable sur le potentiel de référence par un commutateur électronique synchronisé, **caractérisé en ce** que la première tension de fonctionnement (UB) est commutée sur la seconde tension de fonctionnement (US) qui est plus élevée par un redresseur de courant (17) polarisé dans le sens de conduction et par un second enroulement secondaire (18) du transformateur (3).

2. Dispositif de circuit selon la revendication 1, **caractérisé en ce** que le nombre de spires (n) de l'enroulement secondaire (18) est dimensionné de telle manière que la tension retour (UR) qui apparaît pendant la phase de verrouillage du commutateur électronique (5) sur celui-ci est supérieure à la différence entre la seconde tension de fonctionnement (US) stabilisée et la première tension de fonctionnement (UB).

3. Dispositif de circuit selon l'une des revendications 1 ou 2, **caractérisé en ce** que la polarité de l'enroulement secondaire (18) est sélectionnée de telle manière que la tension retour (UR) à la cathode du redresseur de courant (17) descend temporairement au-dessous de la première tension de fonctionnement (UB) si bien qu'il se forme, pendant le retour, une voie de courant par le redresseur de courant (17) et par l'enroulement secondaire (18) vers la seconde tension de fonctionnement (US).

4. Dispositif de circuit selon l'une des revendications 1 à 3, **caractérisé en ce** qu'il est utilisé dans le balayage horizontal d'un récepteur de télévision pour lequel la tension de fonctionnement (UB) à limiter est produite pour le circuit pour la modulation est-ouest du courant de déflexion horizontale.

Fig.1

Fig. 2a

Fig. 2b